Europäisches Patentamt

(19) European Patent Office

Office européen des brevets

(11) Publication number: **0 149 824**
**B1**

(12) **EUROPEAN PATENT SPECIFICATION**

(45) Date of publication of patent specification: **17.10.90**

(51) Int. Cl.⁵: **D 07 B 5/10**, D 07 B 5/12, G 02 B 6/44

(21) Application number: **84115845.4**

(22) Date of filing: **19.12.84**

(54) Method for stranding profile strand.

(30) Priority: **23.01.84 JP 10595/84**

(43) Date of publication of application:
**31.07.85 Bulletin 85/31**

(45) Publication of the grant of the patent:
**17.10.90 Bulletin 90/42**

(84) Designated Contracting States:
**DE FR GB IT**

(56) References cited:
**EP-A-0 148 447**
**DE-A-1 510 150**
**DE-C- 879 812**
**GB-A-1 046 079**
**GB-A-1 424 672**

(73) Proprietor: **Sumitomo Electric Industries, Ltd.**
**5-33, Kitahama 4-chome Chuo-ku**
**Osaka (JP)**

(72) Inventor: **Matsuura, Takayuki c/o Osaka Works**
**of Sumitomo**
**Electric Industries Ltd 1-3 Shimaya 1-chome**
**Konohana-ku Osaka-shi Osaka-fu (JP)**
Inventor: **Miyazaki, Kenji c/o Osaka Works of**
**Sumitomo Electric Ind., Ltd. 1-3 Shimaya 1-**
**chome**
**Konohana-ku Osaka-shi Osaka-fu (JP)**

(74) Representative: **Patentanwälte Kirschner &**
**Grosse**
**Forstenrieder Allee 59**
**D-8000 München 71 (DE)**

Courier Press, Leamington Spa, England.

## Description

The invention relates to a method for producing a composite optical cable by stranding profile strands around an optical central core. The invention in particular relates to an optical composite aerial ground wire or an optical composite transmission line both having an optical transmission function.

Recently, with the spread of optical transmission, an attempt has been made to make efficient use of an aerial ground wire by imparting optical transmission function thereto. Such aerial ground wire having an optical transmission function uses an optical fiber unit as the central wire material. There are various types of optical fiber unit as the central wire material. There are various types of optical fiber units, but most of them comprise a pipe of aluminium or its alloy which receives an optical fiber core.

However, the tensile strength of an optical fiber unit is not so high as that of an ordinary wire. Thus, the use of an optical fiber unit results in a decrease in the strength of the aerial ground wire as a whole. To obtain the strength necessary for an aerial ground wire, it may be thought to increase the diameter of strands to be used. If, however, such procedure is simply put to practice, the apparent diameter of the aerial ground wire in its entirety increases and hence the wire is liable to receive an increased wind pressure; thus, from the standpoint of use of an aerial ground wire, the result is not so desirable.

As a method of increasing the cross-sectional area and the strength of each strand while decreasing the outer diameter of the entire aerial ground wire, it was suggested that the cross-section of strands to be stranded or twisted together around an optical fiber unit should be made substantially a sector so that the outer surface of the aerial ground wire obtained substantially is a cylindrical peripheral surface. In addition, the sector referred to herein is a shape which is obtained when an area defined between two concentric circles is cut by radially extending lines. If a stranded wire is formed of strands each having such cross-sectional shape, but not only the tensile strength is increased without increasing the outer diameter of the cable so much, but also a concomitant effect is obtained that the ambient pressure on the optical fiber unit passing through the center is relieved by the bridge effect on the strands forming the stranded wire layer.

From GB-A-1046079 a method of making a locked coil cable is known, comprising the steps of first spirally stranding a plurality of profiled strands together around a central core while imparting twist to each profile strand to form said cable, and then heat treating said plurality of profiled strands in said cable together with said core to remove stress from said profile strands.

It is the object of the invention to provide a method for producing a composite optical cable by stranding profiled strands around an optical central core without degradation of the quality of the optical central core during stranding and during the following heat treatment.

This object is achieved by the method as claimed in claim 1.

As mentioned above, the tensile strength of the cable is increased without increasing the outer diameter of the cable, but also the ambient pressure on the optical central core is relieved by the bridging effect of the strands forming the stranded wire layer. Furthermore, as the induction heating device only heats the steel wire strands and the cable as a whole is cooled by water, the degradation of the quality of the optical central core due to an increased temperature thereof can be prevented.

Further advantageous embodiments of the inventive method are claimed in the subclaims.

Embodiments of this invention will now be described in detail with reference to the accompanying drawings in which

Fig. 1 is a fragmentary perspective view showing an optical composite aerial ground wire as an example of a stranded wire obtained by this invention;

Fig. 2 is a front view singly showing only one of the profile strands shown in Fig. 1;

Fig. 3 shows the cross-section of the profile strand taken at different positions shown in Fig. 2;

Fig. 4 diagrammatically shows the step of spirally stranding profile strands together around an optical fiber unit while imparting twist to each profile strand;

Fig. 5 diagrammatically shows an example of a heat-treating step for removal of the strains in the profile strands; and

Fig. 6 is an enlarged view showing the step of Fig. 5, the view being taken from another angle.

## Description of the preferred Embodiments

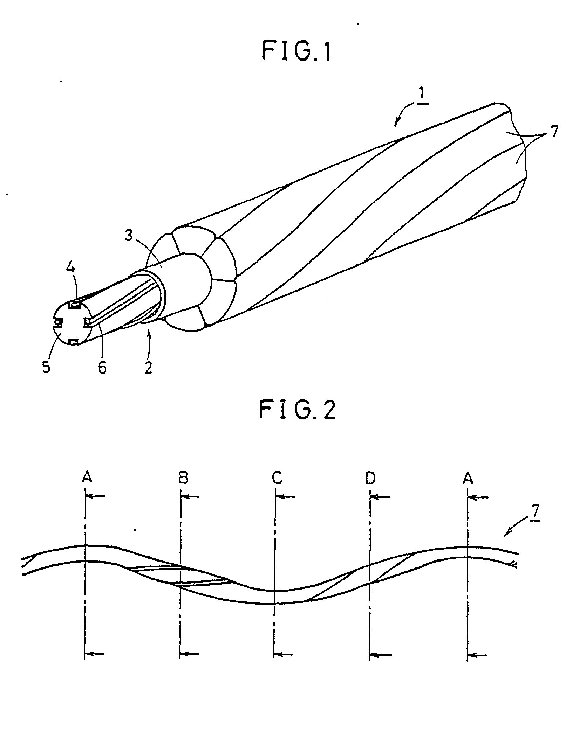

Fig. 1 is a fragmentary perspective view showing an optical composite aerial ground wire 1 obtained by an embodiment of this invention. The optical composite aerial ground wire 1 shown therein has an optical fiber unit 2 serving as a central wire material. The optical fiber unit 2 has a circular pipe 3 of aluminum or its alloy, in which a plurality of optical fiber cores 4 are inserted. The optical fiber cores 4 are received in spirally extending grooves 6 formed on the peripheral surface of a spacer 5 of, e.g., aluminum. On the outer surface of such optical fiber core 2, six profile strands 7 of substantially sectorial cross-section are stranded together. The profile strands 7 are formed of steel wires or aluminum-covered steel wires, and when their tensile strength is not less than 60 kg/mm$^2$, the significance of this invention becomes remarkable. The profile strands 7 form a substantially cylindrical stranded wire layer on the outer peripheral surface of the optical fiber unit 2.

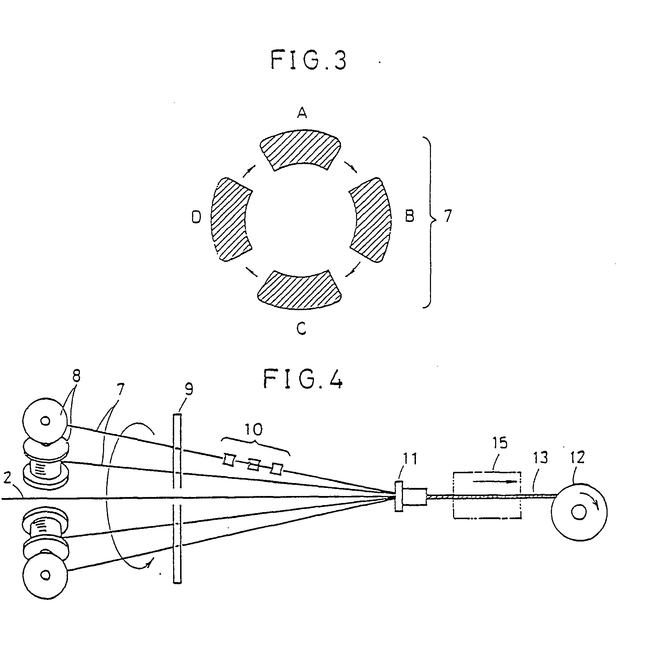

Fig. 2 is a front view showing one of the profile strands 7 shown in Fig. 1. The profile strand 7 has been given spiral twist. The cross-sectional shape of this profile strand 7 taken at different positions is shown collectively in Fig. 3.

In Fig. 3, the sectorial cross-sections shown at A - D correspond to the cross-sections taken along the lines A - D of Fig. 2. As shown by arrows in Fig. 3, the cross-section changes as indicated at A, B, C, D, A and so on. In embodying the method of this invention, first, the profile strands 7 are stranded together around the optical fiber unit 2 so that the shape shown in Fig. 2 may be obtained. This will now be described with reference to Fig. 4.

Fig. 4 is a view for explaining the step of spirally stranding a plurality of profile strands together around an optical fiber unit 2 which serves as a central wire material while imparting twist to each profile strand. Fig. 4 shows a conventional rigid type stranding machine for carrying out the so-called "non-untwisted" type of stranding. Bobbins 8 on the supply side each have a profile strand 7 wound thereon in the usual manner. Such bobbins 8 are prepared, for example, 6 in number (two bobbins on the front side being omitted from the illustration), and are attached so that they make orbital rotation around the central axis of the optical fiber unit 2. Each bobbin 8 makes one revolution around its own axis while making one orbital revolution, as in the case of the relative motion between the earth and the moon. The profile strands 7 drawn out of the bobbins 8 are first passed through an eyeplate 9, and via preform rollers 10 they are collected at the position of a collector die 11. The bobbins 8, eyeplate 9 and preform rollers 10 are synchronously rotated around the central axis of the optical fiber unit 2. Therefore, at the position of the collector die 11, the profile strands 7 are spirally stranded together around the optical fiber unit 2 while twist is imparted to each profile strand. Thereafter, the stranded wire is wound on a bobbin 12 on the take-up side. The strand pitch of the stranded wire 13 to be wound on the bobbin 12 can be optionally selected by adjusting the length of the stranded wire 13 to be wound on the bobbin 12 on the take-up side per unit time, and the number of revolutions around the central axis of the optical fiber unit 2 in unit time.

In addition, in Fig. 4 a case is shown by way of example in which a rigid type stranding machine is used. However, since the movements of the components included in the aforesaid motion system are relative, the rigid type stranding machine may be replaced by a "take-up rotary type stranding machine having no untwisting function". In this case, in Fig. 4, the bobbins 8 will remain stationary rather than making orbital rotation around the central axis of the optical fiber unit 2, and instead the supply bobbin of the optical fiber unit 2, collector die 11 and bobbin 12 on the take-up side will rotate around said central axis.

A heat treatment is performed to remove the residual stresses in the twisted profile strand 7 and has only to be effective in at least removing the strains in the material of the profile strand 7.

With this heat treatment there is the danger of the optical fiber unit 2 being adversely affected.

As for preferable conditions, in the case of the profile strand 7 of aforesaid material, a temperature condition of 200 - 500°C is selected and about 30 minutes of heat treatment is effected. If the temperature is less than 200°C, the strains in the profile strand 7 could not be removed, while, reversely, if it exceeds 500°C, the strength of the profile strand 7 would be decreased.

As for the heat-treating method, a heat-treating device 15 may be placed at a position shown in phantom lines in Fig. 4 so as to effect the heat treatment in the so-called in-line manner. The heat-treating furnace 15 used herein is a high frequency induction heating device.

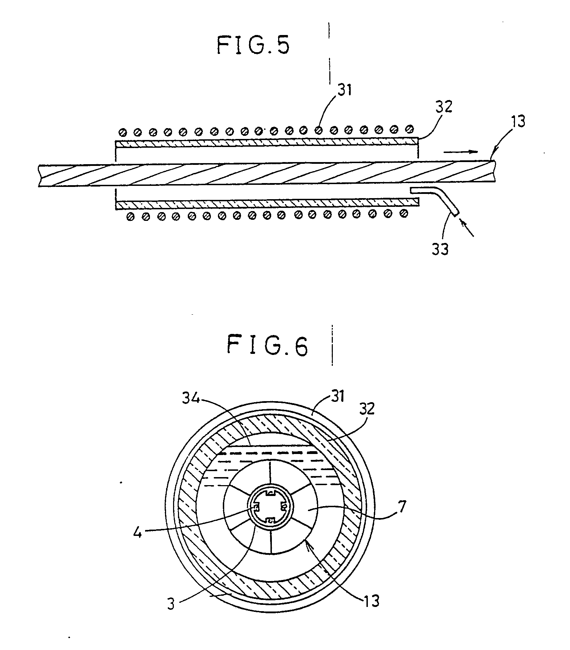

In the case of using high frequency induction heating, as shown in Figs. 5 and 6, a ceramic pipe 32 is disposed in a space surrounded by an induction coil 31 and a stranded wire 13 is passed through said ceramic pipe 32. By introducing water into the ceramic pipe 32 through a water conduit 33, the stranded wire 13 can be cooled by water 34, although the efficiency of heating the stranded wire 13 is lowered; thus, it is possible to reduce the tendency of the heat produced in the steel portion of the stranded wire 13 to be transmitted to the optical fiber core 4. Therefore, there is also obtained a merit that degradation of the quality of the optical fiber unit 4 due to an increase in temperature can be prevented.

When the strains in the profile strands 7 are removed in this manner, an optical composite aerial ground wire 1 as shown in Fig. 1 is obtained.

So far, the invention has been described in detail on the basis of embodiments thereof illustrated with respect to the case of obtaining optical composite aerial ground wires, but the invention is likewise applicable to transmission lines.

**Claims**

1. A method for producing a composite optical cable by stranding profiled strands around an optical central wire comprising the steps of

providing steel wire strands having a substantially sectorial cross-sectional shape, spirally stranding a plurality of said sectorial steel wire strands together around a central core of an optical fiber conductor means, while imparting twist to each sectorial steel wire strand to form said cable;

heat-treating said plurality of sectorial steel wire strands in said cable together with said central core for removing stress from said sectorial steel wire strands, wherein said heat treating step is performed by passing said cable through an elongated pipe surrounded by an induction heating device and simultaneously passing cooling water through said elongated pipe and

winding said cable after said heat-treating step onto a bobbin.

2. The method of claim 1, further comprising providing said sectorial steel wire strands with an aluminium cover.

3. The method of claim 1, further comprising providing said central core of said optical fiber conductor means with an aluminium pipe forming a shell for optical conductor fibers and simultaneously said central core for said cable.

## Patentansprüche

1. Verfahren zur Herstellung eines optischen Verbundkabels durch Verseilen von profilischen Drähten um einen optischen Mitteldraht herum, welches folgende Schritte umfaßt:

Bereitstellen von Stahldrähten mit einer im wesentlichen sektorförmigen Querschnittsform, spiralförmiges Verseilen einer Vielzahl der Sektorstahldrahtadern zusammen um einen Mittelkern einer optischen Faserführeinrichtung herum, während jede Sektorstahldrahtader mit Drehung beaufschlagt wird, um das Kabel zu bilden;

Wärmebehandlung der Vielzahl von Sektorstahldrahtadern in dem Kabel zusammen mit dem Mittelkern, um Spannung aus den Sektorstrahldrahtadern zu entfernen, wobei der Wärmebehandlungsschritt dadurch ausgeführt wird, daß das Kabel durch ein längliches, von einer Induktionsheizvorrichtung umgebenes Rohr und gleichzeitig Kühlwasser durch das längliche Rohr hindurchgeführt werden und

nach dem Wärmebehandlungsschritt Wickeln des Kabels auf eine Spule.

2. Verfahren nach Anspruch 1, welches weiterhin das Breitstellen von Sektorstahldrahtadern mit Aluminiumüberzug umfaßt.

3. Verfahren nach Anspruch 1, welches weiterhin das Versorgen des Mittelkerns der optischen Faserführeinrichtung mit einem Aluminiumrohr, das eine Hülle für optischer Leitfasern und gleichzeitig den Mittelkern für das Kabel bildet, umfaßt.

## Revendications

1. Un procédé pour produire un câble optique composite en assemblant des torons profilés autour d'un câble central optique, comprenant les étapes suivantes:

fourniture de torons de câbles d'acier présentant une section transversale ayant sensiblement la forme d'un secteur, assembler en spirale une pluralité desdits torons de câbles d'acier sectoriels, autour du noyau central d'un moyen conducteur à fibre optique, tout en imprimant une torsion à chaque toron de câble d'acier sectoriel afin de former ledit câble;

traitement thermique de ladite pluralité de torons de câbles d'acier sectoriels situés dans ledit câble, conjointement avec ledit noyau central, afin d'éliminer les contraintes des torons de câbles d'acier sectoriels, dans lequel ladite étape de traitement thermique est réalisée en faisant passer ledit câble à travers un tube allongé entouré d'un dispositif de chauffage par induction et en faisant simultanément passer de l'eau de refroidissement dans ledit tube allongé, et

enroulement, sur une bobine, dudit câble après ladite étape de traitement thermique.

2. Le procédé selon la revendication 1, comprenant, en outre, la fourniture desdits torons de câbles d'acier sectoriels avec une enveloppe d'aluminium.

3. Le procédé selon la revendication 1, comprenant en outre la fourniture dudit noyau central dudit moyen conducteur à fibre optique avec un tube d'aluminium formant une gaine pour les fibres du conducteur optique et formant simultanément ledit noyau central pour ledit câble.

FIG.1

FIG.2

FIG.3

FIG.4

FIG.5

31

32

13

33

FIG.6

34

31

32

7

4

3

13